Europäisches Patentamt

European Patent Office

Office européen des brevets

(11) Publication number: **0 074 241**
**B1**

# EUROPEAN PATENT SPECIFICATION

(45) Date of publication of patent specification: **30.12.86**

(21) Application number: **82304586.9**

(22) Date of filing: **01.09.82**

(51) Int. Cl.⁴: **F 16 H 55/17,** F 16 H 55/06,
B 21 D 53/28

(54) Composite metal-plastic gear and method for making same.

(30) Priority: **04.09.81 US 299446**

(43) Date of publication of application:
**16.03.83 Bulletin 83/11**

(45) Publication of the grant of the patent:
**30.12.86 Bulletin 86/52**

(84) Designated Contracting States:
**AT BE CH DE FR GB IT LI LU NL SE**

(56) References cited:
**BE-A- 637 347**
**CH-A- 406 746**
**DE-A-2 314 211**
**DE-A-2 735 960**
**DE-U-7 719 322**

**Patent Abstract of Japan, Vol. 4, No. 16, 7
February 1980, page 118C72**

(73) Proprietor: **ANDERSON-COOK, INC.
34675 Commerce Street
Fraser Michigan 48026 (US)**

(72) Inventor: **Anderson, Marvin Robert
17 Deepland South
Crosse Pointe Shores Michigan 48236 (US)**

(74) Representative: **Meeks, Frank Burton et al
Urquhart-Dykes & Lord 47 Marylebone Lane
London W1M 6DL (GB)**

Courier Press, Leamington Spa, England.

## Description

### Technical Field

This invention relates to a method for making a composite metal-plastic gear.

### Background Art

The prior art discloses composite gears that include teeth whose meshing surfaces are defined by a thin-wall metallic member filled with a non-metallic material. Such prior composite gears and variations thereof are disclosed by the references discussed below.

United States Patent 3,286,329 discloses a process for manufacturing a gear by explosively deforming a metallic outer shell to include teeth and thereafter filling the interior of the toothed shell with a filler material preferably taught to be aluminum, a synthetic resin or a liquid. The metallic shell blank is mounted on a recessed die and immersed within a liquid in which the explosion takes place to deform the blank to the recessed shape of the die and thereby form the shell teeth. Thereafter, a central part for mounting the gear on a shaft is positioned concentrically within the toothed shell and the enclosed space between the shell and the central part is then filled.

United States Patent 820,789 discloses a gear having a ring or tube that is corrugated or fluted to provide teeth and then provided with a flexible inner portion that is preferably disclosed as being rubber, cloth, leather, cork, or paper.

United States Patent 1,004,980 discloses a gear wheel whose teeth are covered by a toothed mask that is made of thin resilient flat metal. The mask is disclosed as being formed of a resilient metal so as to have a snug spring fit over the gear.

United States Patent 1,393,886 discloses a cast metal gear having a corrugated peripheral facing rim covering the gear teeth. The rim is formed from an elongated strip that is drawn between a pair of meshing gears to provide the rough shape of the teeth. During continued movement of the toothed strip around one of the meshing gears, a reciprocal punch stamps each tooth form using the one gear as a mandrel to provide the final shape of the teeth. Ends of the toothed strip must be joined upon mounting on the cast metal gear to provide the peripheral rim.

United States Patent 3,200,665 discloses a composite gear including a toothed outer rim of metal and an annular inner portion of plastic that mounts the rim on a central metallic hub. The outer metallic rim of this gear has solid teeth which must be formed by a metal removal process.

Prior gears or sprockets for vehicle timing chains have also been made with a thin-wall toothed outer sleeve of metal that is mounted on an annular wall that supports the sprocket on a central hub. The teeth are formed in the sleeve by radial tool segments displaced by movement of a press ram into associated die recesses.

Also, United States Patent 3,982,415 discloses a power transmission member having a sleeve portion that is formed with splines by a rolling process. The spline forming is performed by initially mounting the sleeve portion on a toothed mandrel between a pair of elongated racks. Rack movement meshes the rack and mandrel teeth with the sleeve portion therebetween to form the splines. An annular end wall of the member extends radially from one end of the sleeve portion and, in one embodiment, is spaced from the splines to help maintain flatness of the end wall.

DE—U—7719322 discloses a composite gearwheel but is concerned primarily with prefabricating the intermediate zone or portion of the gearwheel. The gearwheel comprises a metallic outer sleeve to include teeth. The sleeve is fabricated from a unitary thin-walled construction such that the teeth include tooth flanks and top land walls with bottom land walls of the sleeve connecting the adjacent teeth. An elastic plastic material or another elastic material is molded in situ between the tooth flanks. The filler material of this intermediate zone may also be metal.

JP—A—54152072 discloses a thermosetting resin impregnated reinforcing fibre material which can be used in gears.

It has been found that the previously known solid gears are inconveniently heavy and that prior art methods of prefabricating gears increase considerably the production costs, and the gear teeth are not sufficiently rigid.

It is an aim of the invention to alleviate the aforementioned disadvantages.

The invention as claimed solves the problem of producing a gear which is sufficiently strong to replace prior art solid metal gears, and has the strength and durability of such prior art solid gears. It has been found that there is a need for the economical manufacture of light weight gears without sacrificing the required performance capability of the solid prior art gears.

The advantages offered by the invention are that it provides a method of producing gears having sufficient strength and rigidity to compete with previously known all metal gears.

In carrying out the aforementioned aim of the invention, there is provided a method for making a composite metal-plastic gear which comprises an outer metal sleeve of a unitary thin-wall construction having a central axis. Involute teeth are tool pressed into the sleeve in a circumferentially spaced relationship about the central axis of the sleeve. Each tooth includes a pair of spaced tooth flanks or side walls and a circumferentially extending top land wall connecting the side walls thereof at their outer extremities. The sleeve also includes circumferentially extending bottom land walls connecting the adjacent teeth at the inner extremities of their side walls. Thermosetting plastic molded in situ within the sleeve between the side walls supports the teeth to provide performance capability while still providing a lightweight construction that is economical to manufacture.

The thermosetting plastic adhesively bonds to the toothed sleeve and the hub and includes carbon fibers for reinforcing the plastic. Such a reinforced thermosetting plastic molded in situ between the sleeve and the hub provides a high strength resultant gear with the plastic filling the teeth to provide support thereof during use.

Such pressing provides sleeve teeth including side and top land walls with bottom land walls of the sleeve connecting the adjacent teeth. Molding of thermosetting plastic in situ within the toothed sleeve between the side walls provides support to the teeth during use while still permitting the gear to be manufactured economically with a lightweight construction that has the requisite performance capability.

In the preferred method disclosed, the toothed sleeve is mounted on a toothed mandrel before molding the plastic and is supported between a pair of toothed dies. Die movement then meshes the die teeth with the sleeve teeth to roll finish face and flank surfaces on the side walls of the teeth.

Both inward and outward pressing of the teeth are disclosed in performing the method. With most smaller sleeves, the pressing will be in inward direction as there is insufficient space to position tools within the sleeve for outward pressing. However, with larger gears where there is sufficient room within the sleeve, the pressing may be performed in an outward direction.

The metallic central hub is positioned within the toothed sleeve prior to molding of the thermosetting plastic in situ between the sleeve and the hub. With the hub embodiment having the axially extending outer portion, the end wall of the sleeve is engaged with the hub outer portion prior to the plastic molding. It is also possible to connect the sleeve end wall and the hub outer portion such as by welding. With the other hub embodiment, the hub is positioned within the sleeve with the sleeve end wall spaced outwardly from the hub and the in situ plastic molding is then performed.

Molding the thermosetting plastic within the sleeve with carbon fibers therein for reinforcement completes the gear. The thermosetting plastic fills the teeth between the side walls and top lands thereof to provide the reinforcement which is enhanced by the carton fibers.

The roll finishing provides a relatively fast and economical way in which to provide the teeth with face and flank surfaces that have an involute shape. It should be noted that the involute shape of the face and flank surfaces may be either that of a true involute or a modified involute wherein the face surfaces and/or the flank surfaces are either recessed or protruding a slight extent from a true involute shape to control the direction at which the resultant force is applied to each gear tooth during use. The side walls of the sleeve teeth are also preferably hardened such as by a suitable induction heating or laser beam treatment in any conventional manner to provide an extended lifetime.

For certain applications it may be possible to completely eliminate the central metallic hub such as in cases where the gear is meshed directly with two other gears to transmit torque therebetween and does not have to carry torque transmitted to or from the shaft on which the gear is mounted. When engagement and/or a connection between the sleeve end wall and the hub is utilized, the flatness of the end wall is preferably maintained to facilitate this connection by spacing the end wall axially from the portion of the sleeve where the teeth are pressed into the sleeve. An annular ring of the sleeve extends axially between the end wall and the teeth to provide this axial spacing.

The objects, features, and advantages of the present invention are readily apparent from the following detailed description of the best modes for carrying out the invention when taken in connection with the accompanying drawings.

Brief Description of the Drawings

FIGURE 1 is an end view of a composite metal-plastic gear constructed in accordance with the present invention;

FIGURE 2 is a sectional view through the gear taken along line 2—2 of FIGURE 1;

FIGURE 3 is a partial end view of a sleeve blank of the gear taken in the same direction as FIGURE 1 but prior to forming the sleeve teeth;

FIGURE 4 is a sectional view through the sleeve blank taken along the direction of line 4—4 in FIGURE 3;

FIGURE 5 is an end sectional view illustrating the sleeve mounted on a toothed mandrel of pressing apparatus prior to inward tool pressing that forms involute teeth in the sleeve;

FIGURE 6 is a view similar to FIGURE 5 after the inward tool pressing has been performed;

FIGURE 7 is a front view of apparatus utilized to roll finish face and flank surfaces of the sleeve teeth prior to molding thermosetting plastic in situ within the sleeve teeth for reinforcement;

FIGURE 8 is an enlarged sectional view taken in the same direction as FIGURE 7 and illustrating the manner in which the toothed sleeve is mounted on a mandrel and meshed with a pair of dies to perform the roll finishing of the sleeve teeth;

FIGURES 9 and 10 are taken in the same direction as FIGURES 5 and 6 and illustrate the manner in which the sleeve teeth can be tool pressed outwardly as well as inwardly;

FIGURE 11 is a front view of another embodiment of a composite metal-plastic gear constructed in accordance with the present invention;

FIGURE 12 is a sectional view of the composite gear taken along line 12—12 of FIGURE 11; and

FIGURE 13 is an enlarged sectional view of a gear tooth made in accordance with the invention.

### Best Modes for Carrying Out the Invention

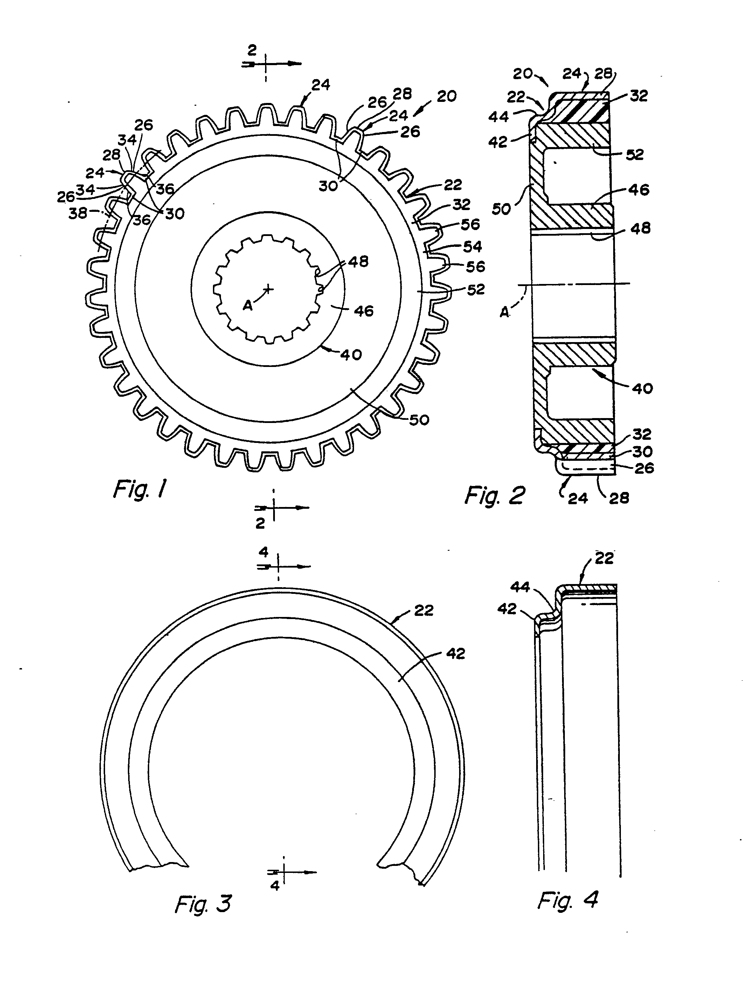

Referring to FIGURES 1 and 2 of the drawings, a composite metal-plastic gear constructed in accordance with the present invention is indicated generally by reference numeral 20 and includes an outer metal sleeve 22 of a unitary thin-wall construction having a central axis A concentric with the rotational axis of the gear. Involute teeth 24 are tool pressed into the sleeve 22, as is hereinafter more fully described, in a circumferentially spaced relationship about the central axis A. Each tooth 24 includes a pair of spaced side walls 26 and a circumferentially extending top land wall 28 connecting the side walls thereof at their outer extremities. The sleeve 22 also includes circumferentially extending bottom land walls 30 connecting the adjacent teeth 24 at the inner extremities of their side walls 26. Thermosetting plastic 32 is molded in situ within the sleeve 22 between the side walls 26 of the gear teeth 24 to support the teeth during use. Any suitable thermosetting plastic with high strength and good adhesion characteristics, such as epoxy, can be utilized.

As is hereinafter more fully described, the side walls 26 of the gear teeth 24 include roll finished face and flank surfaces 34 and 36 respectively located outwardly and inwardly of the gear pitch circle 38 illustrated partially in FIGURE 1. In certain gear applications, this roll finishing can be eliminated depending upon the precision to which the teeth can be tool pressed to the required involute shape. Also, as is more fully hereinafter described, the gear teeth 24 can be formed by inwardly pressing the side and bottom land walls 26 and 30 or by outwardly pressing the side and top land walls 26 and 28.

Gear 20 is illustrated as including a metallic central hub 40 for mounting the gear on an associated shaft about a rotational axis concentric with the gear axis A. As seen in FIGURE 2, the sleeve 22 includes a radially extending annular end wall 42 that is engaged with the hub and which may be connected thereto such as by spot welding. End wall 42 is spaced axially from the teeth 24 by an axially extending annular ring 44 of the sleeve such that the tool pressing of the teeth does not distort the flatness of the end wall and the engaged condition thereof with the hub 40.

As seen by continuing reference to FIGURES 1 and 2, the hub 40 includes an annular inner portion 46 that extends axially and has inner spline recesses 48 for receiving splines on the shaft that mounts the gear in order to rotatively fix the gear with respect to the shaft. A radially extending connector wall 50 of the gear has an inner annular extremity connected to one axial end of the inner hub portion 46 and has an outer annular extremity connected to one axial end of an axial extending outer portion 52 of the hub. The molding plastic 32 fills the region between the toothed sleeve 22 and the outer portion 52 of the hub to reinforce the gear teeth 24. The outer hub portion 52 is preferably spaced inwardly from the bottom land walls 30 of the sleeve 22 and, as seen in FIGURE 1, the molded plastic 32 includes an annular ring 54 and tooth forms 56 that project outwardly from the plastic ring and fill the teeth 24 between the side and top land walls 26 and 28 of the teeth.

The thermosetting plastic 32 adhesively bonds to both the sleeve 22 and the hub 40 and includes carbon fibers for reinforcing the plastic in order to provide greater support to the sleeve teeth 24. Normally carbon fibers utilized with plastic constitute between about thirty and forty percent by weight although commercially available composites have the carbon fiber percentage by weight as low as ten and as high as fifty. The exact percentage utilized will depend upon the specific application for the gear being manufactured and should, of course, be selected to give optimum results with the specific thermosetting plastic used.

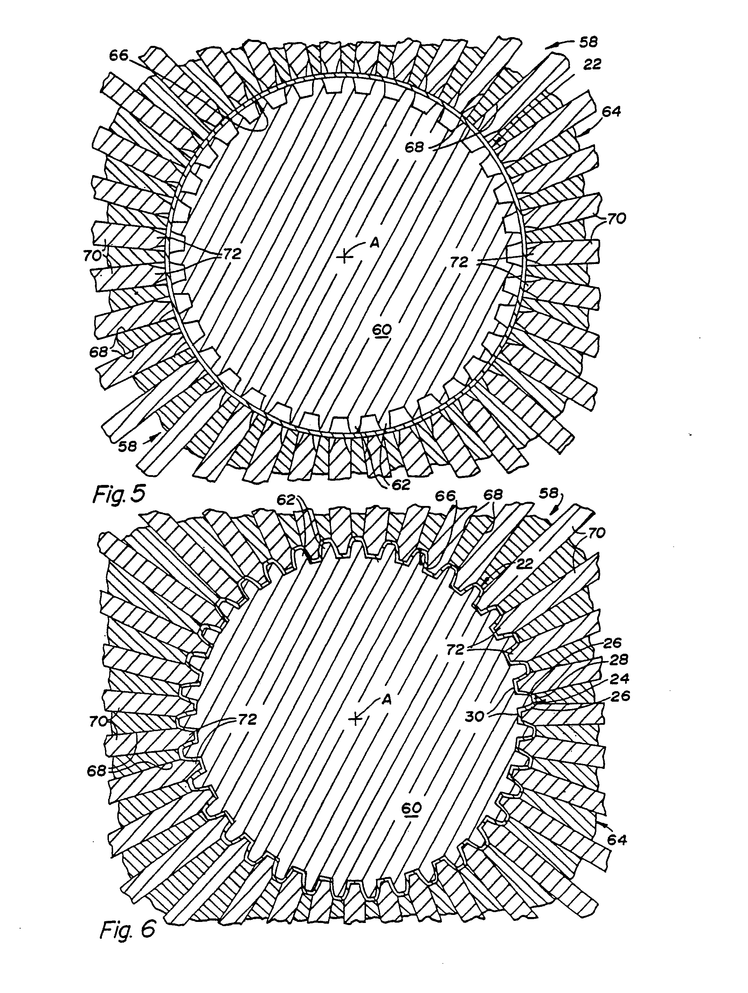

The method for making the composite metal-plastic gear will now be described with initial references to FIGURES 3 and 4 which illustrate the sleeve blank 22 prior to forming of the teeth. This sleeve blank 22 has a unitary thin-wall construction which in engineering terminology is understood to define an internal diameter to wall thickness ratio greater than 10. In actual practice, this ratio is much greater than 10, on the order of about 50 or so, to facilitate the tool pressing of the involute teeth into the sleeve by the pressing apparatus 58 which is illustrated in FIGURES 5 and 6 and more fully hereinafter described. This tool pressing forms the teeth 24 as previously described so as to include side and top land walls with bottom land walls of the sleeve connecting the adjacent teeth. After the tool pressing, the thermosetting plastic is molded in situ within the toothed sleeve between the tooth side walls to support the teeth and thereby provide performance capability while still providing a lightweight construction that is economical to manufacture.

With reference to FIGURE 5, the sleeve blank 22 is initially mounted on a toothed mandrel 60 whose teeth 62 conform in size, shape, and spacing to the inner sides of the teeth to be pressed into the sleeve. A housing 64 of the apparatus defines a cavity 66 of a round shape with a diameter just slightly larger than the outer diameter of the sleeve blank 22. Housing 64 also defines tool slots 68 that extend radially with respect to the central mandrel axis A spaced circumferentially from each other in alignment with the spaces between the mandrel teeth 62. Tools 70 are respectively received within the housing slots 68 for radial movement with respect to the mandrel axis A and have inner ends 72 that conform to the spacing between the teeth to be formed into the sleeve. Outer ends of the tools 70 are simultaneously moved inward by an unshown actuator of the apparatus 58 from the position of FIGURE 5 to the position of FIGURE 6 to inwardly press the side and bottom land walls 26 and 30 into the sleeve. Thereafter, the tools 70 are moved outwardly to permit removal of the toothed sleeve 22 from the mandrel 60 in preparation for the next cycle.

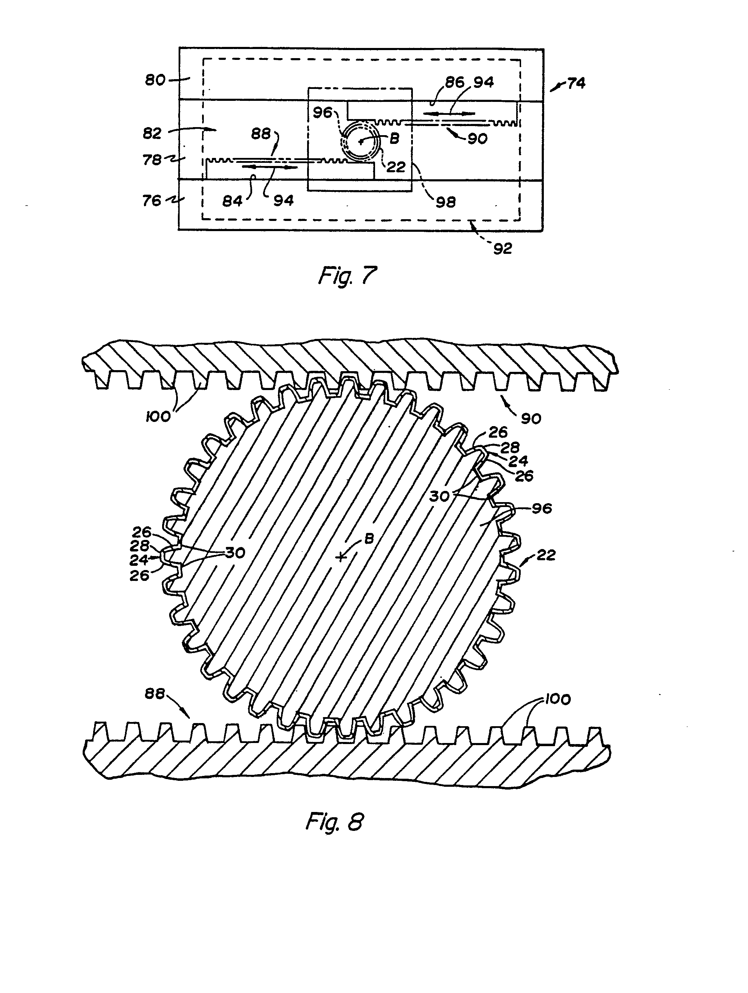

With reference to FIGURE 7, rolling apparatus 74 is utilized to roll finish the toothed sleeve and includes a lower base 76 projecting forwardly from the lower end of a connecting portion 78 from whose upper end an upper base 80 of the apparatus also projects forwardly. Lower and upper bases 76 and 80 define a workspace 82 in which roll finishing of the toothed sleeve 22 is performed. A pair of slideways 84 and 86 on the lower and upper bases 76 and 80, respectively, support a pair of lower and upper toothed dies embodied by elongated racks 88 and 90. A schematically indicated derive mechanism 92 reciprocally drives the die racks 88 and 90 as shown by arrows 94. A toothed mandrel 96 of the apparatus is mounted on the connecting portion 78 within the workspace 82 between the die racks 88 and 90 for rotation about an axis B. A suitable loader 98 shown schematically may be utilized to load toothed sleeves 22 onto the mandrel 96 for roll finishing and to thereafter unload the toothed sleeves after the roll finishing has been performed.

As seen in FIGURE 8, the pair of racks 88 and 90 include teeth 100 that mesh with the toothed sleeve 22 mounted on the mandrel 96 at diametrically opposite locations as the racks are driven in opposite directions from each other. The reciprocal die rack movement first moves the racks 88 and 90 from the end-to-end position shown in FIGURE 7 into an overlapping relationship and then back to the end-to-end position. The meshing of the rack and sleeve teeth as the racks are driven roll finishes the face and flank surfaces on the side walls 26 of each tooth. It will be noted that the depth to which the roll finishing can be performed is less than the total depth of the pressed teeth 24 since interference between the rack finishing teeth 100 and the sleeve teeth is a limiting factor in this regard. Also, in certain applications it may be possible to eliminate the roll finishing depending upon the precision to which the tooth pressing can be performed. However, the roll finishing does provide a relatively fast and economical way in which to provide the involute teeth with face and flank surfaces that have a true or modified involute shape free from defects.

After the roll finishing of the sleeve teeth 24 as described above in connection with FIGURES 7 and 8, the finished sleeve is removed from the mandrel 96 and its toothed side walls 26 are preferably hardened by a suitable induction heating or laser beam treatment in any conventional manner in order to provide an extended lifetime.

The metallic central hub 40 previously described is then positioned within the toothed sleeve 24 as illustrated in FIGURES 1 and 2 and the thermosetting plastic is molded in situ between the sleeve and the hub. As previously mentioned, the end wall 42 of the sleeve is engaged with the outer portion 52 of the hub and may be connected thereto such as by spot welding to further strengthen the resultant gear. However, in most instances, the in situ molding of the thermosetting plastic with carbon fibers therein provides sufficient reinforcement as well as the necessary connection between the sleeve and the hub.

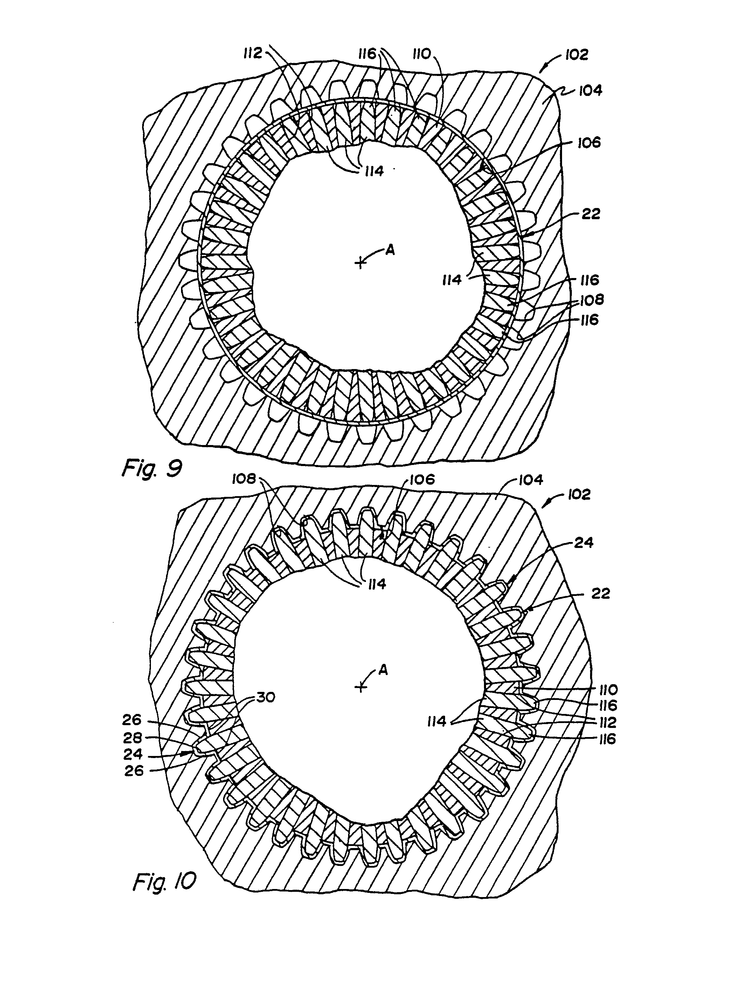

Referring to FIGURES 9 and 10, another embodiment of the tool pressing apparatus is indicated generally by reference numeral 102 and is constructed to outwardly press the side and top land walls of the sleeve blank 22. Pressing apparatus 102 includes a housing 104 which defines a round cavity 106 that receives the sleeve blank 22 is preparation for forming the teeth. Housing 104 includes recesses 108 spaced circumferentially about the central axis A of the sleeve and conforming in size and shape to the outer sides of the teeth to be formed. A tool support housing 110 is located within the housing cavity 106 and the sleeve blank 22 is mounted on the support housing upon insertion into the cavity. Tool support housing 110 defines radial slots 112 extending outwardly from the central sleeve axis A in alignment with the recesses 108 in housing 104. A plurality of tools 114 of the apparatus are respectively received within the slots 112 for radial movement that performs the outward tooth pressing. Each tool 114 has an outer end 116 conforming in size and shape to the inner extremity of the sleeve tooth to be formed.

A suitable unshown actuator of the apparatus 102 moves the tools 114 outwardly from the position of FIGURE 9 to the position of FIGURE 10 to outwardly press the side and top land walls 26 and 28 and thereby form the sleeve teeth 24. Thereafter, the tools 114 are moved inwardly and the toothed sleeve 22 is removed from the apparatus in preparation for the next cycle. Normally this outward pressing of the sleeve teeth will be utilized with larger sleeves, since space limitations make it somewhat more difficult for the tools and a suitable actuator to be located within smaller sleeves although this is not a particular problem with larger sleeves.

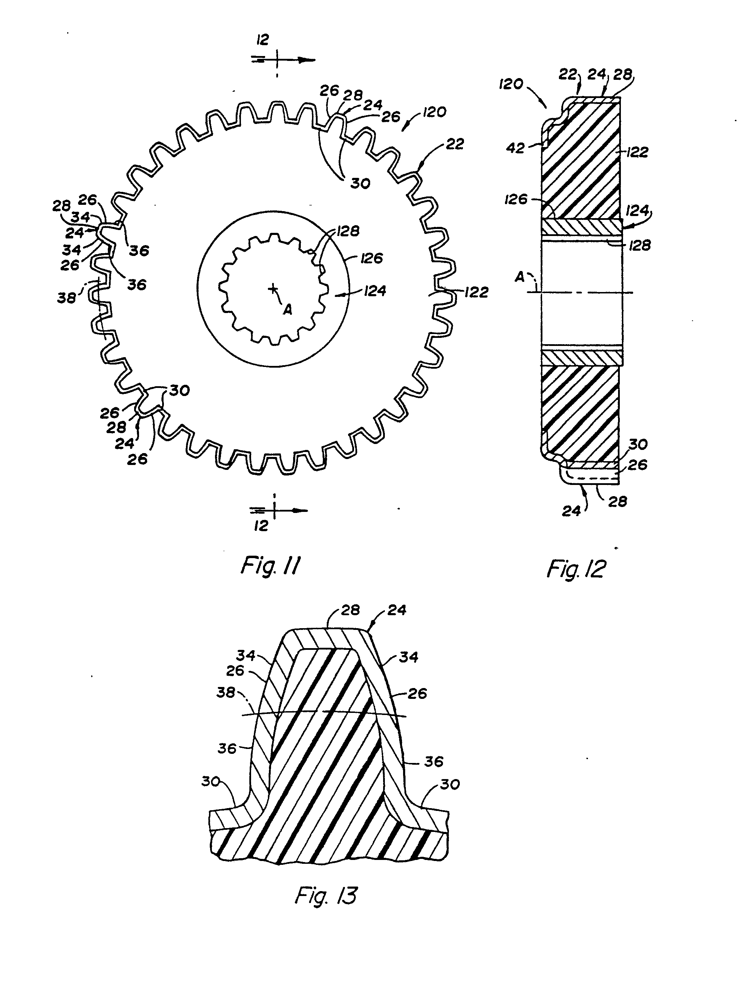

Referring to FIGURES 11 and 12, another embodiment of the gear constructed in accordance with the present invention is indicated generally by reference numeral 120 and includes a toothed sleeve 22 which is of the same construction and made by the same method as the sleeve previously described. As such, like reference numerals are applied to the sleeve 22 and the previous description is applicable and will not be repeated. Gear 120 also includes thermosetting plastic 122 molded in situ within the sleeve 22 between the side walls 26 of the involute teeth 24. A metallic central hub 124 of the gear is positioned within the sleeve 22 prior to the molding of the plastic and has a generally annular configuration concentric with the sleeve axis A. Hub 124 extends axially for the thickness of the gear 120 as seen in FIGURE 12 and includes a round outer extremity 126 that is adhesively bonded to the thermosetting plastic 122 during the in situ molding. An inner extremity of the hub 124 includes splines 128 for rotatively coupling the gear 120 to a shaft on which the gear is mounted. It will be noted that the sleeve end wall 42 in this gear embodiment is spaced outwardly from the adjacent end of the hub 124 such that the thermosetting plastic 122 provides the complete connection between the sleeve and the hub. The thermosetting plastic 122 adhesively bonds to the sleeve 22 and the outer hub extremity 126 and includes carbon fibers that reinforce the plastic to strengthen the teeth 24 and the connection between the sleeve and the hub.

As seen in FIGURE 13, the involute gear teeth 24 made in accordance with the present invention have a composite metal-plastic construction that is of high strength while still being economical to manufacture in the manner previously described.

While the term "thin-wall" is defined in standard engineering terminology to mean a round wall having an inner diameter to wall thickness ratio greater than 10, this ratio is much greater for sleeves utilized with the gear herein disclosed. Normally, this ratio for gear sleeves constructed in accordance with the present invention is on the order to 50 or more; for example, an internal diameter of 4 and 1/8 inches and a wall thickness of about 1/16 of an inch has a ratio of 66.

For a more complete understanding of the manner in which actuation takes place of the tools 70 and 114 respectively shown in FIGURES 5, 6 and 9, 10 reference should be made to copending application Serial No. 82304287.4 (= EP—A—74 189) filed on 13 August 1982.

## Claims

1. A method for making a composite metal-plastic gear (20) comprising: tool pressing involute teeth (24) into a metal sleeve (22) of a unitary thin-wall construction such that the teeth (24) include tooth flanks (26) and top land walls (28) with bottom land walls (30) of the sleeve (22) connecting the adjacent teeth (24); molding thermosetting plastic (32) in situ within the toothed sleeve (22) between the tooth flanks (26) to support the teeth (24); and roll finishing face and flank surfaces on the tooth flanks (26) of the teeth (24).

2. A method as set forth in claim 1 wherein the toothed sleeve is mounted on a toothed mandrel (60) before molding the plastic (32) and is supported between a pair of toothed dies (88, 90) that are moved to mesh with the sleeve teeth (24).

3. A method as in claim 1 or 2 wherein the teeth (24) are pressed inwardly.

4. A method as in claim 1 or 2 wherein the teeth (24) are pressed outwardly.

5. A method as in claim 1 or 2 wherein a metallic central hub (40) is positioned within the toothed sleeve (22) and the plastic (32) is molded in situ between the sleeve (22) and the hub (40).

6. A method as in claim 5 wherein the sleeve (22) is engaged with the hub (40) prior to molding the plastic (32).

7. A method as in Claim 3 or 4 wherein the thermosetting plastic (32) is molded with carbon fibers therein for reinforcement.

## Revendications

1. Procédé pour réaliser une roue dentée (20) composite en métal et matière plastique comprenant: presser par outil des dents (24) en développante de cercle dans un manchon métallique (22) de construction à paroi mince unitaire de sorte que les dents (24) comportent des flancs de dent (26) et des parois plates supérieures (28) avec des parois plates de fond (30) du manchon (22) reliant les dents adjacentes (24); mouler de la matière plastique thermodurcissable (32) in situ à l'intérieur du manchon denté (22) entre les flancs de dent (26) pour supporter les dents (24); et usiner par roulage les surfaces de face et de flanc sur les flancs de dent (26) des dents (24).

2. Procédé selon la revendication 1, dans lequel le manchon denté est monté sur un mandrin denté (60) avant le moulage de la matière plastique (32) et est supporté entre une paire de moules dentés (88, 90) qui sont déplacés pour engrener avec les dents de manchon (24).

3. Procédé selon la revendication 1 ou 2, dans lequel les dents (24) sont pressées vers l'intérieur.

4. Procédé selon la revendication 1 ou 2, dans lequel les dents (24) sont pressées vers l'extérieur.

5. Procédé selon la revendication 1 ou 2, dans lequel un moyeu central métallique (40) est placé à l'intérieur du manchon denté (22) et la matière plastique (32) est moulée in situ entre le manchon (22) et le moyeu (40).

6. Procédé selon la revendication 5, dans lequel le manchon (22) est engagé avec le moyeu (40) avant le moulage de la matière plastique (32).

7. Procédé selon la revendication 3 ou 4, dans lequel la matière plastique thermodurcissable (32) est moulée en ayant des fibres de carbone dans celle-ci pour son renforcement.

## Patentansprüche

1. Verfahren zum Herstellen eines Verbundzahnrades (20) aus Metall und Kunststoff bestehend aus: Dem Maschinenpressen einer Evolventenverzahnung (24) in eine metallene Hülse (22) einstückig dünnwandiger Bauweise, derart, daß die Zähne (24) Zahnflanken (26) und obere Kopfflächen (28) sowie untere Fußflächen (30) der Hülse (22) aufweisen, die benachbarte Zähne (24) miteinander verbinden; dem Vergießen eines Duroplasten (32) an Ort und Stelle zwischen den Zahnflanken (26) in der verzahnten Hülse (22), um die Zähne (24) zu stützen; und dem Prägepolieren der nach Außen gerichteten Flächen und Flankenflächen der Zahnflanken (26) der Zähne (24).

2. Verfahren nach Anspruch 1, wobei die verzahnte Hülse vor dem Vergießen des Duroplasten (32) auf einem verzahnten Dorn (60) montiert und zwischen einem Paar verzahnter Matrizen (88, 90) gehalten wird, die derart bewegt werden, daß sie mit den Zähnen (24) der Hülse kämmen.

3. Verfahren nach Anspruch 1 oder 2, wobei die Zähne (24) nach Innen gepreßt werden.

4. Verfahren nach Anspruch 1 oder 2, wobei die Zähne (24) nach Außen gepreßt werden.

5. Verfahren nach Anspruch 1 oder 2, wobei eine metallene Mittelnabe (40) in der verzahnten Hülse (22) ausgerichtet und das Duroplast (32) an Ort und Stelle zwischen der Hülse (22) und der Nabe (40) vergossen wird.

6. Verfahren nach Anspruch 5, wobei die Hülse (22) vor dem Vergießen des Duroplasten (32) mit der Nabe (40) in Eingriff gebracht wird.

7. Verfahren nach einem der Ansprüche 1—6, wobei das Duroplast (32) mit eingelegten Kohlefasern zur Verstärkung vergossen wird.

7

Fig. 1

Fig. 2

Fig. 3

Fig. 4

Fig. 5

Fig. 6

Fig. 7

Fig. 8

Fig. 9

Fig. 10

Fig. II

Fig. I2

Fig. I3